# EUROPÄISCHE PATENTSCHRIFT

(11) **EP 3 768 560 B1**
(45) Veröffentlichungstag und Bekanntmachung des Hinweises auf die Patenterteilung: **26.08.2026**
(21) Anmeldenummer: 18789768.1
(22) Anmeldetag: 18.10.2018
(51) Int. Cl.: B60S 1/08, H02P 29/024, H02P 6/18, H02P 6/182, H02P 6/21, H02P 29/60

(54) **SCHEIBENWISCHERSYSTEM**
WINDSHIELD WIPER SYSTEM
SYSTÈME D'ESSUIE-GLACE

(30) Priorität: 22.03.2018 DE 102018204454
(43) Veröffentlichungstag der Anmeldung: 27.01.2021
(73) Patentinhaber: VOLKSWAGEN AG, 38440 Wolfsburg (DE)
(72) Erfinder: NIEHAUS, Christopher Daniel, 38446 Wolfsburg (DE)
(86) Internationale Anmeldenummer: PCT/EP2018/078548
(87) Internationale Veröffentlichungsnummer: WO 2019/179642

(56) Entgegenhaltungen:
- DE-A1- 102009 001 258
- DE-A1- 102012 224 313
- US-A1- 2006 053 577
- US-A1- 2017 324 357

## Beschreibung

### Technischer Hintergrund

Die Erfindung betrifft Scheibenwischersysteme mit elektrischen Antriebseinheiten, und insbesondere Maßnahmen, um einen konstanten Wischbetrieb zu gewährleisten, ohne den Konstruktionsaufwand zu erhöhen.

### Technischer Hintergrund

Grundsätzlich werden Antriebseinheiten bei Scheibenwischersystemen nach Antriebseinheiten mit Reversierbetrieb und Rundläuferantriebe mit Reversiergetriebe unterschieden. Bei Antriebseinheiten mit Reversierbetrieb ist eine umfangreiche Steuerung bzw. Regelung notwendig, die die Endpositionen erkennt und eine Drehrichtungsumkehr des Antriebsmotors bewirkt. Dies erfordert eine aufwändige Positionserfassung, um die Endlagen zur Bestimmung des Zeitpunktes der Drehrichtungsumkehr zu bestimmen.

Andererseits werden Antriebseinheiten, die das Scheibenwischersystem mithilfe eines Reversiergetriebes antreiben, häufig mit einem Rundläufermotor ausgebildet. Ein hoher Aufwand für eine Positionserkennung ist nicht notwendig, da der Wischbereich durch das Reversiergetriebe vorgegeben ist. Häufig werden als Rundläufermotoren einfache bürstenkommutierte Gleichstrommotoren verwendet, deren Drehzahl erheblich von dem von der Wischposition der Wischblätter abhängigen Wischwiderstand und von der Bordnetzspannung abhängt. Dies führt häufig zu einem sehr unruhigen Wischbetrieb, was auf den Fahrer zumindest irritierend wirken kann.

Weiterhin erfordern derartige Antriebsmotoren zur Einstellung von verschiedenen Geschwindigkeitsstufen den Einsatz von Relais, um die Versorgungsspannung über verschiedene Vorwiderstände oder mehrere Schleifkontakte auf den Kommutator an den Antriebsmotor anzulegen. Dies erfordert einen hohen Bauteilaufwand und kann zudem hohe Leistungsverluste in den Vorwiderständen hervorrufen.

Aus der Druckschrift DE 22 182 35 ist beispielsweise eine Drehzahlregelung für einen Gleichstrommotor bekannt, der u. a auch in Scheibenwischersystemen eingesetzt werden kann. Die Drehzahlregelung erfolgt durch Pulsweitenmodulation eines bürstenkommutierten Gleichstrommotors, wobei durch Wahl des Tastverhältnisses die an dem Gleichstrommotor anliegende effektive Versorgungsspannung einstellbar ist.

Aus der Druckschrift DE 10 2005 019 853 A1 ist ein Scheibenwischersystem mit einem Direktantriebsmotor bekannt. Der Antriebsmotor kann als bürstenloser Gleichstrommotor ausgebildet sein, der in Verbindung mit einem Positionssensor angesteuert wird, um eine Geschwindigkeit der Wischerarme einzustellen und eine Positionierung der Wischerarme zu ermöglichen.

Es ist Aufgabe der vorliegenden Erfindung, eine verbesserte Antriebseinheit für ein Scheibenwischersystem zur Verfügung zu stellen, die mit geringem Aufwand zu realisieren ist, wobei die üblichen Funktionen einer vorgegebenen kontinuierlichen Wischgeschwindigkeit und der stufigen Wischgeschwindigkeitsregelung realisiert sind.

Die Druckschrift DE 10 2012 224 313 A1 offenbart ein Verfahren zum Bestimmen einer Läuferlage einer elektronisch kommutierten Maschine, wobei eine induzierte Spannung in Spulen der elektrischen Maschine aus Maschinenströmen und Maschinenspannungen, bestimmt wird und die Läuferlage aus einer Abweichung der induzierten Spannung von einer geschätzten induzierten Spannung geschätzt wird. Die geschätzte Läuferlage wird mit einem binären Positionssignal synchronisiert, das zwei Positionsflanken für eine Kommutierung von 360° elektrisch bereitstellt.

Die Druckschrift US 2006/053577 A1 offenbart eine Scheibenwischeranordnung mit einem Motor mit einer Ausgangswelle und der Möglichkeit, ein Reversiergetriebe zu nutzen, um eine Hin- und Herbewegung von Scheibenwischerarmen zu erreichen.

Aus der Druckschrift DE 10 2009 001 258 A1 ist ein Verfahren zur Überwachung der thermischen Belastung eines Elektromotors bekannt, bei dem zumindest die Spannung und der Strom gemessen werden. Eine Motorkonstante des Elektromotors, die das Verhältnis von Motordrehmoment zum aufgenommenen Strom beschreibt, wird als Funktion dieser Messgrößen ermittelt, wobei der Elektromotor in einem thermisch zulässigen Bereich arbeitet, wenn die Motorkonstante einen zugeordneten Schwellenwert nicht überschreitet.

Die Druckschrift US 2017/324357 A offenbart eine Scheibenwischeranordnung mit einer Wischereinheit und einer Antriebseinheit, wobei die Anordnung ein Reserviergetriebe umfasst. Ferner ist dazu eine Leistungseinheit ausgebildet, die Phasenspannungen an den Antriebsmotor abhängig von Steuersignalen bereitzustellen.

### Offenbarung der Erfindung

Diese Aufgabe wird durch das Scheibenwischersystem mit einer Antriebseinheit nach Anspruch 1 gelöst.

Weitere Ausgestaltungen sind in den abhängigen Ansprüchen angegeben.

Gemäß einem ersten Aspekt ist ein Scheibenwischersystem, insbesondere eines Kraftfahrzeugs, mit einer Wischereinheit und einer Antriebseinheit vorgesehen, wobei die Antriebseinheit umfasst:
- einen elektronisch kommutierten Antriebsmotor mit einem Läufer und mehreren Phasensträngen zum Bereitstellen eines Statormagnetfelds;
- ein Reversiergetriebe, das mit dem Läufer des Antriebsmotors gekoppelt ist, um bei einer Drehung des Läufers einen oder mehrere Wischerarme einer Wischeranordnung in einer Schwenkbewegung mit wechselnden Richtungen anzusteuern;
- eine Leistungseinheit, die ausgebildet ist, um Phasenspannungen an den Antriebsmotor abhängig von Steuersignalen bereitzustellen und die eine Einrichtung zum Messen von Phasenströmen durch die Phasenstränge aufweist;
- eine Steuereinheit, die ausgebildet ist,
   ∘ um abhängig von den Phasenströmen eine sensorlose Lageerfassung einer Läuferlage des Läufers des Antriebsmotors durchzuführen,
   ∘ um die Steuersignale abhängig von der Läuferlage zum Bereitstellen eines Antriebsmoments zu generieren, und
   ∘ um eine Drehzahlregelung abhängig von einer vorgegebenen Betriebsfunktion durchzuführen.

Weiterhin kann die Steuereinheit ausgebildet sein, um die Steuersignale als Pulsweitenmodulationssignale zu generieren, um mithilfe der Leistungseinheit variable Phasenspannungen vorzugeben.

Eine Idee der obigen Antriebseinheit besteht darin, einen elektronisch kommutierten Antriebsmotor vorzusehen, der als Rundläufermotor ein Reversiergetriebe antreibt, um die reversierende Bewegung eines oder mehrerer Wischarme zu bewirken. Zudem wird der Antriebsmotor mithilfe einer Steuereinheit angesteuert, die durch einfache Vorgabe von Pulsweitenmodulationssignale mit einem Tastverhältnis das Antriebsmoment steuert. Diese Steuereinheit führt eine Drehzahlregelung basierend auf einer sensorlosen Lageerfassung bzw. sensorlosen Drehzahlerfassung durch. Auf diese Weise werden für die Antriebseinheit für das Scheibenwischersystem lediglich eine Steuereinheit, eine Leistungseinheit, der Antriebsmotor und das Reversiergetriebe benötigt. Etwaige Relais für die stufige Einstellung der Wischgeschwindigkeit, Positionssensoren und Drehzahlsensoren werden nicht benötigt.

Da zudem die einzustellenden Wischwinkel über das Reversiergetriebe vorgegeben werden, ist für verschiedene Fahrzeugtypen keine Änderung bzw. Parametrisierung oder Softwareänderung für die Steuereinheit notwendig und dadurch die Antriebseinheit modular für verschiedene Fahrzeugtypen einsetzbar.

Es kann vorgesehen sein, dass die Steuereinheit ausgebildet ist, um zum Starten des Scheibenwischersystems Steuersignale zum Generieren eines vorbestimmten Drehfelds durch die Phasenstränge vorzugeben, und nach dem Anlaufen des Antriebsmotors die Drehzahlregelung basierend auf der sensorlosen Lageerfassung zu starten.

Weiterhin kann die Steuereinheit ausgebildet sein, eine Blockiererkennung zum Erkennen einer Blockierung des Antriebsmotors abhängig von den Phasenströmen durchzuführen.

Gemäß einer Ausführungsform kann die Steuereinheit ausgebildet sein, eine Temperaturdetektion für eine Temperatur des Antriebsmotors abhängig von den Phasenströmen und den angelegten Phasenspannungen durchzuführen.

Weiterhin ist die Steuereinheit ausgebildet, um der vorgegebenen Betriebsfunktion eine Soll-Drehzahl des Läufers des Antriebsmotors zuzuordnen und um die Drehzahlregelung abhängig von der Soll-Drehzahl durchzuführen.

### Kurzbeschreibung der Zeichnungen

Ausführungsformen werden nachfolgend anhand der beigefügten Zeichnung näher erläutert. Es zeigt:

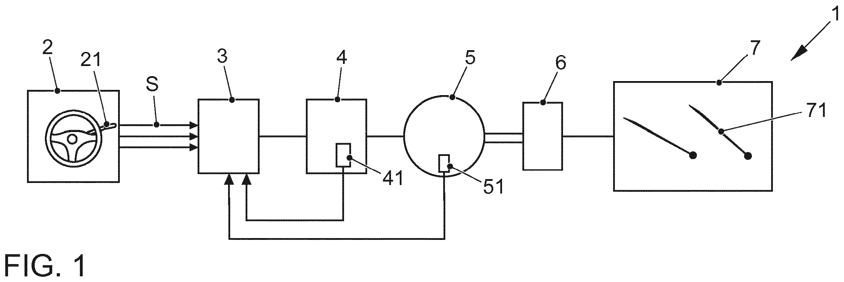

- Fig. 1: eine schematische Darstellung eines Scheibenwischersystems mit einer Antriebseinheit.

### Beschreibung von Ausführungsformen

Figur 1 zeigt ein Scheibenwischersystem 1 mit einer Lenkradanordnung 2, einer Steuereinheit 3, einer Leistungseinheit 4, einem elektrisch kommutierten Antriebsmotor 5, einem Reversiergetriebe 6 und einer Wischereinheit 7.

Die Lenkradanordnung 2 weist einen Lenkstockhebel 21 auf, über den das Scheibenwischersystem 1 ein- und ausgeschaltet werden kann. Weiterhin ermöglicht der Lenkstockhebel 21 eine stufige Einstellung der Wischgeschwindigkeit und/oder ein Einstellen einer Intervallschaltung des Scheibenwischersystems 1. Die entsprechende Einstellung der Betriebsfunktion kann durch die Stellung des Lenkstockhebels 21 von der Lenkradanordnung 2 über eine oder mehrere Signalleitungen S an die Steuereinheit 3 des Scheibenwischersystems 1 vorgegeben werden. Die Umsetzung des Betriebsmodus erfolgt in der Steuereinheit 3.

Der Antriebsmotor 5 kann als mehrphasiger Rundläufermotor ausgebildet sein und kann beispielsweise als permanentmagneterregter Synchronmotor, Asynchronmotor oder dergleichen ausgelegt sein. Der Antriebsmotor 5 weist mehrere Phasenstränge auf, an die jeweils entsprechend einem Kommutierungsmuster eine Phasenspannung angelegt wird, um einen vorbestimmten Phasenstrom zu bewirken. Der Phasenstrom bewirkt das durch den Antriebsmotor 5 zu stellende Antriebsmoment.

Das Reversiergetriebe 6 wird durch den Antriebsmotor 5 angetrieben und so mit der Wischereinheit 7 gekoppelt, dass ein bestimmter Wischwinkel durch die Wischerarme 71 der Wischereinheit 7 abgefahren wird. Das Reversiergetriebe 6 ermöglicht es in bekannter Weise, einen Antriebsmotor 5 zu verwenden, der als Rundläufermotor ausgebildet ist, so dass auf einen Wechsel der Drehrichtung des Antriebsmotors 5 durch entsprechende Ansteuerung der Steuereinheit 3 verzichtet werden kann. Dies ermöglicht es, auf Positionssensoren zur Erkennung einer Endbewegungslage der Wischerarme 71 zu verzichten und so auf den Verarbeitungsaufwand in der Steuereinheit 3 zu reduzieren.

Die Phasenspannung wird von der Leistungseinheit 4 bereitgestellt. Zur Ansteuerung des Antriebsmotors 5 stellt die Steuereinheit 3 Steuersignale PWM an die Leistungseinheit 4 bereit. Die Leistungseinheit 4 weist ein Leistungstreibermodul für jeden Phasenstrang des Antriebsmotors 5 auf, das beispielsweise als Inverter oder H-Brückenschaltung ausgebildet sein kann. Durch die Ansteuerung des Leistungstreibermoduls mit Hilfe der von der Steuereinheit 3 bereitgestellten Steuersignale PWM wird im Wechsel entweder ein hohes Versorgungspotenzial oder ein niedriges Versorgungspotenzial an dem jeweiligen Phasenstrang des Antriebsmotors 5 angelegt, wobei die durch die Tastverhältnisse vorgegebene Zeitdauern die effektive Phasenspannung definieren.

Die Steuereinheit 3 ist ausgelegt, über die Leistungseinheit 4 den Antriebsmotor 5 mithilfe einer Pulsweitenmodulation so anzusteuern, dass dieser ein vorgegebenes Antriebsmoment bereitstellt.

Die Kommutierung des Antriebsmotors 5 kann mithilfe einer Blockkommutierung oder Sinuskommutierung erfolgen. Um eine Kommutierung des Antriebsmotors 5 durchzuführen, ist eine Positionsinformation für eine Läuferlage des Antriebsmotors 5 notwendig. Damit kann der Antriebsmotor 5 durch geeignete Wahl der Steuersignale PWM so bestromt werden, dass die Ausrichtung und Stärke eines Statormagnetfelds so mit dem Läufer des Antriebsmotors 5 wechselwirkt, dass das gewünschte Antriebsmoment bereitgestellt werden kann.

Zur Erfassung der Läuferlage kann ein sensorloses Erfassungsprinzip verwendet werden. Dies ermöglicht es, auf das Vorsehen von Positionssensoren zu verzichten, um so den Konstruktionsaufwand zu reduzieren. Sensorlose Verfahren zur Erfassung der Läuferlage können in an sich bekannter Weise auf einem Back-EMF-Verfahren oder einem Verfahren zur Messung von magnetischer Anisotropie basieren. Beide Verfahren basieren auf einer Auswertung der Phasenstromverläufe, mit denen es möglich ist, die Läuferlage zu bestimmen.

Die Phasenstromverläufe können über eine Strommessung der Phasenströme erfasst werden. Diese kann in der Leistungseinheit z.B. mithilfe von Messwiderständen 41 realisiert sein, die seriell mit den Phasensträngen des Antriebsmotors 5 verschaltet sind. Durch den Stromfluss durch die Messwiderständen 41 fällt über diese eine Messspannung ab, die durch entsprechenden Spannungsmesseinrichtungen, wie z.B. Analog-Digital-Wandler, in der Steuereinheit 3 erfasst und zur Ermittlung der Läuferlage mit an sich bekannten Verfahren zur sensorlosen Läuferlageermittlung weiterverarbeitet wird.

Das entsprechende Kommutierungsmuster wird nun abhängig von der ermittelten Läuferlage eingestellt, so dass eine entsprechende Phasenspannung von der Leistungseinheit 4 an den entsprechenden Phasenstrang des Antriebsmotors 5 angelegt wird.

Weiterhin ist in der Steuereinheit 3 eine Drehzahlregelung implementiert, die basierend auf einer aus der Änderung der Läuferlage ermittelbaren Drehgeschwindigkeit des Antriebsmotos 5 durchgeführt wird. Durch den Lenkstockhebel 21 wird dazu eine Soll-Drehzahl bzw. Sollwischgeschwindigkeit vorgegeben und eine entsprechende Funktion in der Steuereinheit 3 ausgewählt, die für eine Bewegung der Wischerarme 71 der Wischeranordnung 7 vorgegeben ist.

Somit kann entsprechend der Steuersignale eine Soll-Drehzahl für den Antriebsmotor 5 entsprechend einer gewünschten Wischgeschwindigkeit vorgegeben werden und insbesondere bei einem intermittierenden Betrieb bestimmt werden, wie lange in den Wischphasen die Drehzahlregelung aktiv ist. Das Erreichen der Endposition (Parkstellung) der Wischerarme 71 wird durch einen im Antriebsmotor 5 oder alternativ im Reversiergetriebe 6 vorgesehenen Endpositionssensor 51, z.B. in Form eines Schleifkontakts oder Hallsensors, realisiert.

Das Signal des Endpositionssensors 51 wird in der Leistungseinheit 4 oder der Steuereinheit 3 ausgewertet und zur Abschaltung der Phasenspannung genutzt. Die Drehzahlregelung ermöglicht es, Schwankungen der Versorgungsspannung auszugleichen, da diese das Antriebsmoment des Antriebsmotors 5 erhöht, wenn die Ist-Drehzahl geringer ist als die Soll-Drehzahl und umgekehrt. Auch können so Drehmomentenschwankungen aufgrund verschiedener Reibwiderstände der Wischerarme 71 der Wischereinheit 7 ausgeregelt werden.

Da die sensorlose Läuferlageerfassung bzw. Drehzahlerfassung erst ab einer bestimmten Drehzahl zuverlässig möglich ist, kann im Moment des Einschaltens des Antriebsmotors 5 zunächst, d.h. z.B. für eine vorbestimmte Zeitdauer, ein lageunabhängiges definiertes Drehfeld vorgegeben werden, und während des Anlaufens des Läufers des Antriebsmotors 5 die sensorlose Lageerfassung gestartet werden.

Weiterhin kann die Steuereinheit 3 eine Blockiererkennung vorsehen, bei der durch die sensorlose Läuferlageerfassung ermittelten Motordrehzahl sowie das aktuell zu stellende Antriebsmoment als Berechnungsgrundlage verwenden, wobei bei einer hohen Abweichung zwischen dem zu stellenden Antriebsmoment und einem damit zu erwartenden Drehzahlbereich und der tatsächlichen Ist-Drehzahl eine Blockierung des Antriebsmotors 5 bzw. der Wischereinheit 7 festgestellt wird.

Die Steuereinheit 3 kann unmittelbar an dem Antriebsmotor 5 oder davon entfernt angeordnet sein. Zudem kann über die Messung des Phasenstroms für die sensorlose Lageerfassung in Verbindung mit der jeweils an den jeweiligen Phasenstrang angelegten Spannung auf eine Temperatur des Leiters des Phasenstrangs, d. h. eine Temperatur des Antriebsmotors 5 geschlossen werden. Somit kann zudem ein Überhitzungsschutz realisiert werden, bei dem die Wischereinheit 7 gedrosselt bzw. abgeschaltet wird, wenn die Temperatur des Antriebsmotors 5 über einer vorgegebenen Schwellentemperatur liegt.

## Patentansprüche

1. Scheibenwischersystem (1) mit einer Wischereinheit (7) und einer Antriebseinheit für ein Scheibenwischersystem (1), insbesondere eines Kraftfahrzeugs, wobei die Antriebseinheit umfasst:
- einen elektronisch kommutierten Antriebsmotor (5) mit einem Läufer und mehreren Phasensträngen zum Bereitstellen eines Statormagnetfelds;
- ein Reversiergetriebe (6), das mit dem Läufer des Antriebsmotors (5) gekoppelt ist, um bei einer Drehung des Läufers einen oder mehrere Wischerarme (71) einer Wischereinheit (7) in einer Schwenkbewegung mit wechselnden Richtungen anzusteuern;
- eine Leistungseinheit (4), die ausgebildet ist, um Phasenspannungen an den Antriebsmotor (5) abhängig von Steuersignalen bereitzustellen und die eine Einrichtung zum Messen von Phasenströmen durch die Phasenstränge aufweist;
- eine Steuereinheit (3), die ausgebildet ist,
∘ um abhängig von den Phasenströmen eine sensorlose Lageerfassung einer Läuferlage des Läufers des Antriebsmotors (5) durchzuführen,
∘ um die Steuersignale abhängig von der Läuferlage zum Bereitstellen eines Antriebsmoments zu generieren, und
∘ um eine Drehzahlregelung abhängig von einer vorgegebenen Betriebsfunktion durchzuführen.
wobei die Steuereinheit (3) ausgebildet ist, um der vorgegebenen Betriebsfunktion eine Soll-Drehzahl des Läufers des Antriebsmotors (5) zuzuordnen und um die Drehzahlregelung abhängig von der Soll-Drehzahl durchzuführen, wobei die Drehzahlregelung das Antriebsmoment des Antriebsmotors (5) erhöht, wenn die Ist-Drehzahl geringer ist als die Soll-Drehzahl und umgekehrt, um Schwankungen einer Versorgungsspannung auszugleichen.

2. Scheibenwischersystem (1) nach Anspruch 1, wobei die Steuereinheit (3) ausgebildet ist, um die Steuersignale als Pulsweitenmodulationssignale zu generieren, um mithilfe der Leistungseinheit (4) variable Phasenspannungen vorzugeben.

3. Scheibenwischersystem (1) nach Anspruch 1 oder 2, wobei die Steuereinheit (3) ausgebildet ist, um zum Starten des Scheibenwischersystems (1) Steuersignale zum Generieren eines vorbestimmten Drehfelds durch die Phasenstränge vorzugeben, und nach dem Anlaufen des Antriebsmotors (5) die Drehzahlregelung basierend auf der sensorlosen Lageerfassung zu starten.

4. Scheibenwischersystem (1) nach einem der Ansprüche 1 bis 3, wobei die Steuereinheit (3) ausgebildet ist eine Blockiererkennung zum Erkennen einer Blockierung des Antriebsmotors (5) abhängig von den Phasenströmen durchzuführen.

5. Scheibenwischersystem (1) nach einem der Ansprüche 1 bis 4, wobei die Steuereinheit (3) ausgebildet ist eine Temperaturdetektion für eine Temperatur des Antriebsmotors (5) abhängig von den Phasenströmen und den angelegten Phasenspannungen durchzuführen.

## Claims

1. Windshield wiper system (1) comprising a wiper unit (7) and a drive unit for a windshield wiper system (1), in particular of a motor vehicle, the drive unit comprising:
- an electronically commutated drive motor (5) having a rotor and a plurality of phase conductors for providing a stator magnetic field;
- a reversing gear (6) which is coupled to the rotor of the drive motor (5) in order, when the rotor rotates, to control one or more wiper arms (71) of a wiper unit (7) in a pivoting motion having changing directions;
- a power unit (4) which is designed to provide phase voltages to the drive motor (5) on the basis of control signals and which comprises a device for measuring phase currents through the phase conductors;
- a control unit (3) which is designed,
∘ to carry out sensorless position detection of a rotor position of the rotor of the drive motor (5) on the basis of the phase currents,
∘ to generate the control signals on the basis of the rotor position in order to provide a drive torque, and
∘ to carry out speed regulation on the basis of a specified operating function,
wherein the control unit (3) is designed to assign a target speed of the rotor of the drive motor (5) to the specified operating function and to carry out the speed regulation on the basis of the target speed, wherein the speed regulation increases the drive torque of the drive motor (5) when the actual speed is lower than the target speed and vice versa, in order to compensate for fluctuations in a supply voltage.

2. Windshield wiper system (1) according to claim 1, wherein the control unit (3) is designed to generate the control signals as pulse-width modulation signals in order to specify variable phase voltages by means of the power unit (4).

3. Windshield wiper system (1) according to claim 1 or 2, wherein the control unit (3) is designed to specify control signals for generating a predetermined rotary field by the phase conductors in order to start the windshield wiper system (1), and to start the speed regulation on the basis of the sensorless position detection after the drive motor (5) has started.

4. Windshield wiper system (1) according to any of claims 1 to 3, wherein the control unit (3) is designed to carry out a blockage detection for detecting a blockage of the drive motor (5) on the basis of the phase currents.

5. Windshield wiper system (1) according to any of claims 1 to 4, wherein the control unit (3) is designed to carry out a temperature detection for a temperature of the drive motor (5) depending on the phase currents and the applied phase voltages.

## Revendications

1. Système à essuie-glace (1) comportant une unité formant essuie-glace (7) et une unité d'entraînement pour un système à essuie-glace (1), en particulier d'un véhicule automobile, dans lequel l'unité d'entraînement comprend :
- un moteur d'entraînement (5) à commutation électronique, comportant un rotor et plusieurs conducteurs de phase pour la mise à disposition d'un champ magnétique statorique ;
- un mécanisme inverseur (6) qui est couplé au rotor du moteur d'entraînement (5) afin de commander, lors d'une rotation du rotor, un ou plusieurs bras d'essuie-glace (71) d'une unité formant essuie-glace (7) dans un mouvement de pivotement à directions alternées ;
- une unité de puissance (4) qui est configurée pour mettre à disposition des tensions de phase au moteur d'entraînement (5) en fonction de signaux de commande et qui présente un dispositif permettant de mesurer des courants de phase traversant les conducteurs de phase ;
- une unité de commande (3) qui est configurée
∘ pour réaliser, en fonction des courants de phase, un captage de position sans capteur d'une position de rotor du rotor du moteur d'entraînement (5),
∘ pour générer les signaux de commande en fonction de la position de rotor pour la mise à disposition d'un couple d'entraînement, et
∘ pour réaliser une régulation de vitesse de rotation en fonction d'une fonction de fonctionnement prédéfinie,
dans lequel l'unité de commande (3) est configurée pour attribuer à la fonction de fonctionnement prédéfinie une vitesse de rotation cible du rotor du moteur d'entraînement (5) et pour réaliser la régulation de vitesse de rotation en fonction de la vitesse de rotation cible, dans lequel la régulation de vitesse de rotation augmente le couple d'entraînement du moteur d'entraînement (5) lorsque la vitesse de rotation réelle est inférieure à la vitesse de rotation cible, et inversement, afin de compenser des fluctuations d'une tension d'alimentation.

2. Système à essuie-glace (1) selon la revendication 1, dans lequel l'unité de commande (3) est configurée pour générer les signaux de commande sous forme de signaux de modulation de largeur d'impulsion afin de fournir des tensions de phase variables à l'aide de l'unité de puissance (4).

3. Système à essuie-glace (1) selon la revendication 1 ou 2, dans lequel l'unité de commande (3) est configurée pour, lors du démarrage du système à essuie-glace (1), fournir des signaux de commande pour la génération d'un champ magnétique rotatif prédéfini traversant les conducteurs de phase, et, après le démarrage du moteur d'entraînement (5), démarrer la régulation de vitesse de rotation sur la base du captage de position sans capteur.

4. Système à essuie-glace (1) selon l'une des revendications 1 à 3, dans lequel l'unité de commande (3) est configurée pour réaliser une reconnaissance de blocage pour la reconnaissance d'un blocage du moteur d'entraînement (5) en fonction des courants de phase.

5. Système à essuie-glace (1) selon l'une des revendications 1 à 4, dans lequel l'unité de commande (3) est configurée pour réaliser une détection de température à la recherche d'une température du moteur d'entraînement (5) en fonction des courants de phase et des tensions de phase appliquées.
